(19) **Europäisches Patentamt / European Patent Office / Office européen des brevets**

(11) **EP 4 579 583 A1**

(12) **EUROPEAN PATENT APPLICATION**
published in accordance with Art. 153(4) EPC

(43) Date of publication:
02.07.2025 Bulletin 2025/27

(51) International Patent Classification (IPC):
*G06T 7/00* (2017.01)　　　*G06T 7/194* (2017.01)
*G06V 10/25* (2022.01)

(21) Application number: 23857010.5

(22) Date of filing: 11.07.2023

(52) Cooperative Patent Classification (CPC):
**G06T 7/00; G06T 7/194; G06V 10/25**

(86) International application number:
**PCT/JP2023/025574**

(87) International publication number:
**WO 2024/042893 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.08.2022 JP 2022132979

(71) Applicant: Sony Group Corporation
Tokyo 108-0075 (JP)

(72) Inventors:
• ONO, Yuki
Tokyo 108-0075 (JP)
• GOMITA, Jun
Tokyo 108-0075 (JP)
• KAINO, Akihiko
Tokyo 108-0075 (JP)

(74) Representative: 2SPL Patentanwälte PartG mbB
Landaubogen 3
81373 München (DE)

(54) **INFORMATION PROCESSING DEVICE, INFORMATION PROCESSING METHOD, AND PROGRAM**

(57)　Changes in the lighting environment are absorbed, and the extraction target region is inferred with high accuracy.

An information processing apparatus is provided, and the information processing apparatus includes a processing unit that infers the region of a physical object in a captured image, on the basis of a non-extraction-target image displayed or projected in an imaging space and the captured image in which the non-extraction-target image and the physical object present in the imaging space are captured. The appearance of the non-extraction-target image depending on the position and orientation of a camera that images the captured image is known.

*FIG. 14*

EP 4 579 583 A1

## Description

TECHNICAL FIELD

The present disclosure relates to an information processing apparatus, an information processing method, and a program.

BACKGROUND ART

In recent years, techniques for extracting a predetermined region in an image have been developed. For example, Non-Patent Document 1 discloses a machine learning technique for inferring a foreground region excluding a fixed background region in an image captured by a fixed camera.

CITATION LIST

NON-PATENT DOCUMENT

Non-Patent Document 1: Shanchuan Lin and five others, "Real-Time High-Resolution Background Matting", December 14, 2022, [Online], [Searched on August 18, 2022], Internet, <https://arxiv.org/pdf/2012.07810.pdf>

SUMMARY OF THE INVENTION

PROBLEMS TO BE SOLVED BY THE INVENTION

However, the accuracy of inference by the technology disclosed in Non-Patent Document 1 is greatly affected by the lighting environment.

SOLUTIONS TO PROBLEMS

According to an aspect of the present disclosure, an information processing apparatus is provided, and the information processing apparatus includes a processing unit that infers the region of a physical object in a captured image, on the basis of a non-extraction-target image displayed or projected in an imaging space and the captured image in which the non-extraction-target image and the physical object present in the imaging space are captured. The appearance of the non-extraction-target image depending on the position and orientation of a camera that images the captured image is known.

Further, according to another aspect of the present disclosure, an information processing method that is implemented by a processor is provided, and the information processing method includes inferring the region of a physical object in a captured image on the basis of a non-extraction-target image displayed or projected in an imaging space and the captured image in which the non-extraction-target image and the physical object present in the imaging space are captured. The appearance of the non-extraction-target image depending on the position and the orientation of a camera that images the captured image is known.

Furthermore, according to yet another aspect of the present disclosure, a program for causing a computer to function as an information processing apparatus is provided, and the information processing apparatus includes a processing unit that infers the region of a physical object in a captured image, on the basis of a non-extraction-target image displayed or projected in an imaging space and the captured image in which the non-extraction-target image and the physical object present in the imaging space are captured. The appearance of the non-extraction-target image depending on the position and orientation of a camera that images the captured image is known.

BRIEF DESCRIPTION OF DRAWINGS

Fig. 1 is an explanatory view of an imaging system according to an embodiment of the present disclosure.
Fig. 2 is an explanatory view of a background video image depending on a camera position of the imaging system according to the embodiment.
Fig. 3 is an explanatory view of a background video image depending on a camera position of the imaging system according to the embodiment.
Fig. 4 is an explanatory diagram illustrating a video content production process according to the embodiment.
Fig. 5 is a block diagram of the imaging system according to the embodiment.
Fig. 6 is a flowchart of background video generation by the imaging system according to the embodiment.
Fig. 7 is a diagram illustrating an example of an imaging environment according to the embodiment.
Fig. 8 is a diagram for explaining a difference between a rendered image 82 and a background image 83 according to the embodiment.
Fig. 9 is a block diagram for explaining an example of the functional configuration of an information processing apparatus 10 according to the embodiment.
Fig. 10 is a diagram for explaining the three stages of generation of an inference unit 115 and inference of a mask image 85 using the inference unit 115 according to the embodiment.
Fig. 11 is a diagram for explaining a second captured image 842 according to the embodiment.
Fig. 12 is a diagram for explaining learning of the inference unit 115 in calibration ST22 according to the embodiment.
Fig. 13 is a flowchart showing a flow of learning of the inference unit 115 in the calibration ST22 according to the embodiment.
Fig. 14 is a diagram for explaining the inference of the mask image 85 by the inference unit 115 in actual imaging ST23 according to the embodiment.

Fig. 15 is a diagram for explaining learning based on a lighting condition 70 according to the embodiment.

Fig. 16 is a diagram for explaining learning of a second inference unit 117 according to the embodiment.

Fig. 17 is a diagram for explaining composition (superimposition) of an AR object quasi-captured image 77 with the captured image 84 according to the embodiment.

Fig. 18 is a diagram for explaining a situation in which one LED wall 505 is imaged with two cameras 502a and 502b according to the embodiment.

Fig. 19 is a diagram for explaining generation of a composite image 89 according to the embodiment.

Fig. 20 is a diagram for explaining a case where a non-extraction-target image is a projection image according to the embodiment.

Fig. 21 is a block diagram illustrating an example of the hardware configuration of an information processing apparatus 90 according to the embodiment.

MODE FOR CARRYING OUT THE INVENTION

In the description below, a preferred embodiment of the present disclosure will be explained in detail, with reference to the accompanying drawings. Note that, in the present specification and the drawings, components having substantially the same functional configuration are denoted by the same reference sign, and explanation of them will not be repeated.

Further, in the present specification and the drawings, in cases where a plurality of the same components is distinguished and explained, alphabets are added to the ends of the reference numerals in some cases. On the other hand, in cases where there is no need to distinguish a plurality of the same components, the above alphabets may be omitted, and the same explanation may be made about all the plurality of the same configurations in some cases.

Note that explanation will be made in the following order.

    1. Embodiment

        1.1. Imaging System and Content Production
        1.2. Details of the Technology
        1.3. Modifications

    2. Example of a Hardware Configuration
    3. Summary

<1. Embodiment>

<<1.1. Imaging System and Content Production>>

First, an example of an imaging system and production of video content to which the technology according to the present disclosure can be applied is described.

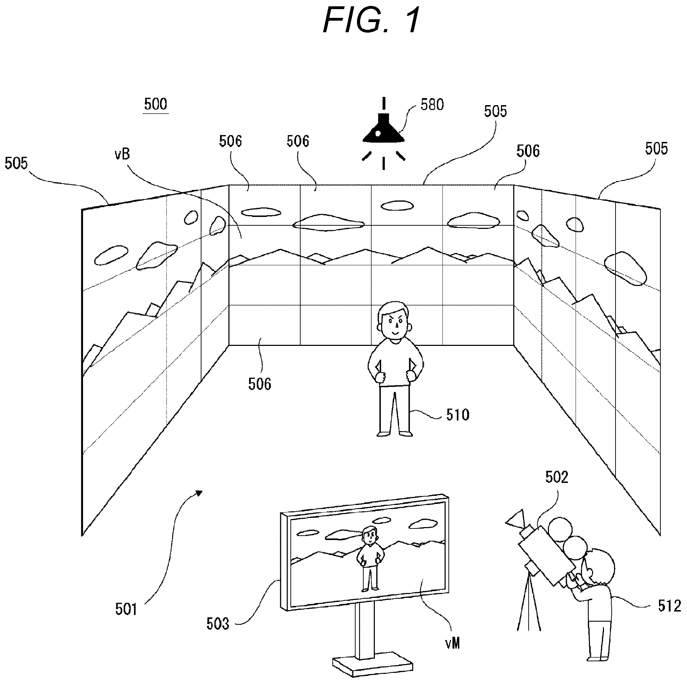

Fig. 1 schematically illustrates an imaging system 500. This imaging system 500 is a system that performs imaging as virtual production, and some of equipment disposed in a photo studio is illustrated in the drawing.

In the photo studio, a performance area 501 in which a performer 510 does performance such as acting is provided. Large display devices are disposed on at least the back surface, and further, on the left and right side surfaces, and the upper surface of this performance area 501. Although the device type of the display devices is not limited, the drawing illustrates an example in which LED walls 505 are used as an example of the large display devices.

One LED wall 505 forms a large panel by vertically and horizontally connecting and arranging a plurality of LED panels 506. The size of the LED walls 505 herein is not limited to any particular size, but is only required to be a size that is necessary or sufficient as the size for displaying the background when the performer 510 is imaged.

A necessary number of lights 580 are disposed at necessary positions such as positions above or on a side of the performance area 501, to illuminate the performance area 501.

In the vicinity of the performance area 501, a camera 502 for imaging a movie or some other video content is disposed, for example. A camera operator 512 can move the position of the camera 502, and also adjust the imaging direction, the angle of view, and the like. Of course, it is also conceivable that movement, the angle of view, and the like of the camera 502 is adjusted by remote control. Furthermore, the camera 502 may automatically or autonomously move or change the angle of view. For this purpose, the camera 502 is mounted on a camera platform or a mobile body in some cases.

The camera 502 collectively images the performer 510 in the performance area 501 and the video image displayed on the LED walls 505. For example, by displaying a scenery as a background video vB on the LED walls 505, it is possible to capture a video image similar to that in a case where the performer 510 actually exists and performs acting in the place of the scenery.

An output monitor 503 is disposed near the performance area 501. The video image captured by the camera 502 is displayed on the output monitor 503 in real time as a monitor video vM. Thus, the director and staff members who produce the video content can check the video image being captured.

As described above, the imaging system 500 that images the performance by the performer 510 with the background on the LED walls 505 in the photo studio has various advantages, compared with green screen imaging.

For example, in the case of green screen imaging, it is difficult for the performer to imagine the background and the situation of the scene, which might affect the performance. On the other hand, the display of the background video vB makes the performer 510 perform easily, and the quality of performance is improved. Also, it is easy for the director and other staff to determine whether or not the performance of the performer 510 matches the background and the situation of the scene.

Further, post-production after imaging is more efficient than that in the case of green screen imaging. This is because what is called chroma key compositing is unnecessary in some cases, or color correction and reflection compositing is unnecessary in some cases. Furthermore, even in a case where chroma key compositing is required at the time of imaging, a background screen does not need to be added, which also contributes to efficiency enhancement.

In the case of green screen imaging, the green hue increases on the performer's body, dress, and objects, and therefore, correction thereof is necessary. Also, in the case of green screen imaging, in a case where there is an object on which a surrounding scenery is reflected, such as glass, a mirror, or a snowdome, it is necessary to generate and synthesize an image of the reflection, which is troublesome work.

On the other hand, in a case of imaging by the imaging system 500 in Fig. 1, the green hue does not increase, and accordingly, the correction thereof is unnecessary. Further, as the background video vB is displayed, the reflection on actual objects such as glass is naturally obtained and captured, and thus, it is also unnecessary to synthesize any video image of reflection.

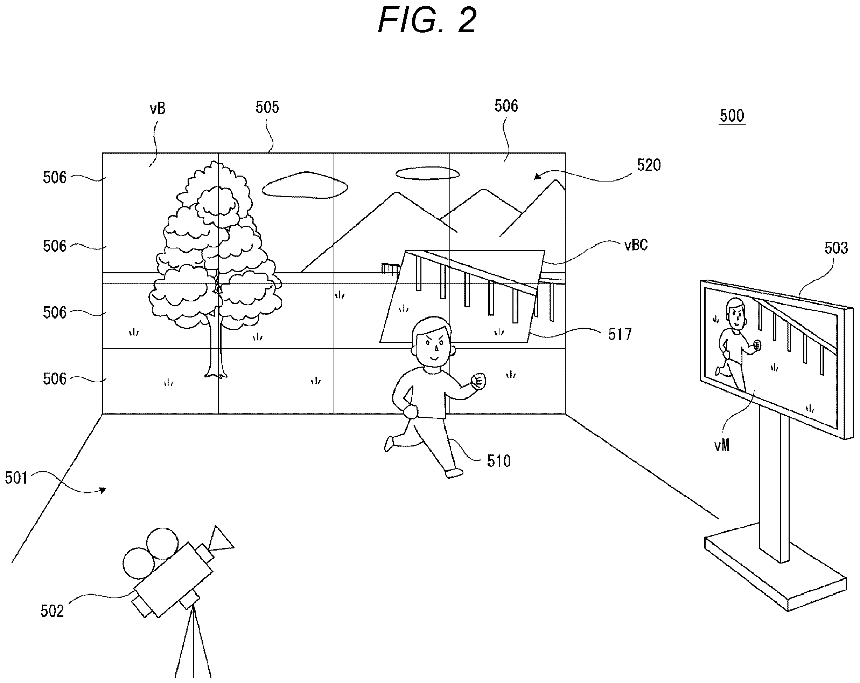

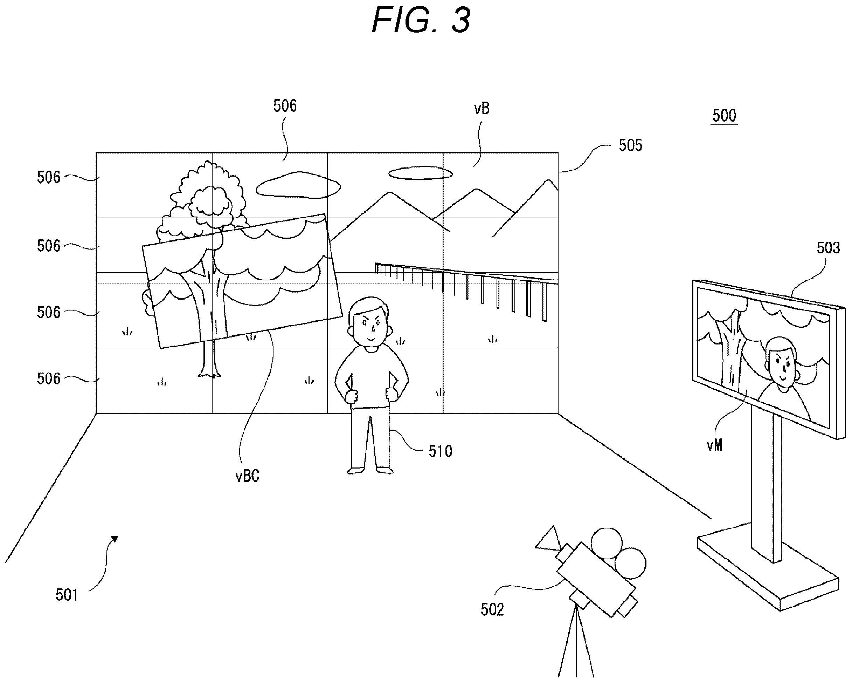

Here, the background video vB is described with reference to Figs. 2 and 3. Even if the background video vB is displayed on the LED wall 505 and is imaged together with the performer 510, the background of the captured video image is unnatural only by simply displaying the background video vB. This is because a background that is three-dimensional and has depth is actually used as the background video vB in a planar manner.

For example, the camera 502 can image the performer 510 in the performance area 501 from various directions, and can also conduct a zoom operation. The performer 510 does not stop at one place. As a result, the actual appearance of the background for the performer 510 should then change depending on the position, the imaging direction, the angle of view, or the like of the camera 502. However, such a change is not captured in the background video vB as a planar video image. In view of this, the background video vB is changed so that the background becomes similar to the actual appearance including parallax.

Fig. 2 illustrates a state in which the camera 502 is imaging the performer 510 from a position on the left side in the drawing, and Fig. 3 illustrates a state in which the camera 502 is imaging the performer 510 from a position on the right side in the drawing. In each drawing, a captured region video vBC is illustrated in the background video vB.

Note that the portion of the background video vB excluding the captured region video vBC is referred to as the "outer frustum", and the captured region video vBC is referred to as the "inner frustum".

The range of this captured region video vBC (inner frustum) corresponds to the range actually imaged by the camera 502 in the display surface of the LED wall 505. Further, the captured region video vBC is a video image that is transformed so as to express the scenery that is actually viewed when the position of the camera 502 is set as a viewpoint depending on the position, the imaging direction, the angle of view, or the like of the camera 502.

Specifically, a 3D model (3D background data) as a background is prepared, and the captured region video vBC is sequentially rendered on the basis of the viewpoint position of the camera 502 with respect to the 3D background data in real time.

Note that the range of the captured region video vBC is actually a range slightly wider than the range imaged by the camera 502 at that point of time. This is to prevent the video image of the outer frustum from being reflected due to a drawing delay and to avoid the influence of diffracted light from the video image of the outer frustum, when the range of imaging is slightly changed by panning, tilting, zooming, or the like of the camera 502.

The video image of the captured region video vBC rendered in real time in this manner is combined with the video image of the outer frustum. The video image of the outer frustum used in the background video vB is rendered beforehand on the basis of the 3D background data, and a video image is incorporated as the captured region video vBC rendered in real time into part of the video image of the outer frustum, to generate the entire background video vB.

As a result, even when the camera 502 is moved back and forth, or left and right, or a zoom operation is performed, the background of the range imaged together with the performer 510 is imaged as a video image depending on the viewpoint position change accompanying the actual movement of the camera 502.

As illustrated in Figs. 2 and 3, the monitor video vM including the performer 510 and the background is displayed on the output monitor 503, and this is the captured video image. The background in the monitor video vM is the captured region video vBC. That is, the background included in the captured video image is a real-time rendered video image.

As described above, in the imaging system 500 of the embodiment, the background video vB including the captured region video vBC is changed in real time so that not only the background video vB is simply displayed in a planar manner, but also a video image similar to that in a case where imaging on location is actually performed can be captured.

Note that it is possible to also reduce the processing load on the system by rendering in real time only the captured region video vBC as the range reflected by the camera 502, instead of the entire background video vB displayed on the LED wall 505.

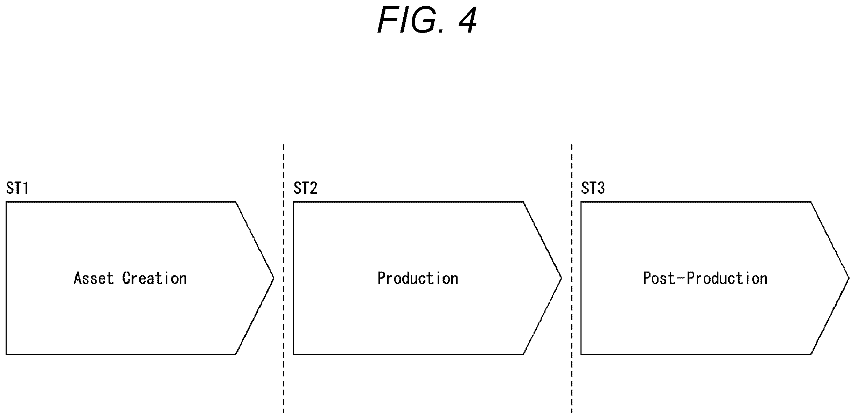

Here, the process for producing video content as virtual production in which imaging is performed by the imaging system 500 is described. As illustrated in Fig. 4, the video content producing process is roughly divided into three stages. The stages are asset creation ST1, production ST2, and post-production ST3.

The asset creation ST1 is a step of producing the 3D background data for displaying the background video vB. As described above, the background video vB is generated by performing rendering in real time using the 3D background data at the time of imaging. For this purpose, the 3D background data as a 3D model is produced in advance.

Examples of methods for producing the 3D background data include full computer graphics (CG), point cloud data scanning, and photogrammetry.

Full CG is a method for producing a 3D model with computer graphics. Among the three methods, this method requires the largest number of steps and the longest hours, but is preferably used in a case where an unrealistic video image, a video image that is difficult to capture in practice, or the like is desired to be the background video vB.

Point cloud data scanning is a method for generating a 3D model based on point cloud data by performing distance measurement from a certain position using LiDAR, for example, capturing a 360-degree image from the same position with a camera, and placing color data captured by the camera on a point measured by LiDAR. Compared with full CG, a 3D model can be produced in a shorter time. Furthermore, it is easy to produce a 3D model with higher definition than that by photogrammetry.

Photogrammetry is a photogrammetry technology for analyzing parallax information from two-dimensional images obtained by imaging an object from a plurality of viewpoints to obtain a dimension and a shape. 3D model production can be performed in a short time.

Note that point cloud information acquired by LiDAR may be used in 3D data generation by photogrammetry.

In the asset creation ST1, the 3D model to be the 3D background data is produced by using these methods, for example. Of course, the above methods may be used in combination. For example, part of a 3D model produced by point cloud data scanning or photogrammetry is produced with CG, and is then combined.

The production ST2 is a step of performing imaging in a photo studio as illustrated in Fig. 1. Element technologies in this case include real-time rendering, background display, camera tracking, lighting control, and the like.

The real-time rendering is a rendering process for obtaining the captured region video vBC at each time point (each frame of the background video vB) as described with reference to Figs. 2 and 3. This is to render the 3D background data produced in the asset creation ST1 from a viewpoint depending on the position or the like of the camera 502 at each time point.

In this manner, the real-time rendering is performed to generate the background video vB of each frame including the captured region video vBC, and the background video vB is displayed on the LED wall 505.

The camera tracking is performed to obtain information about the imaging by the camera 502, and tracks position information, the imaging direction, the angle of view, and the like of the camera 502 at each time point. The imaging information including these pieces of information associated with the respective frames is supplied to a rendering engine, so that real-time rendering depending on the viewpoint position and the like of the camera 502 can be performed.

The imaging information is information linked with or associated with a video image as metadata.

It is assumed that the imaging information includes information about the position of the camera 502 at each frame timing, the direction of the camera, the angle of view, the focal length, the f-number (aperture value), the shutter speed, lens information, and the like.

The lighting control is to control the state of lighting in the imaging system 500, and specifically, to control the amount of light, the emission color, the lighting direction, and the like of each light 580. For example, the lighting control is performed depending on time setting, place setting, and the like of the scene to be imaged.

The post-production ST3 indicates various kinds of processing to be performed after imaging. For example, video correction, video adjustment, clip editing, video effecting, and the like are performed.

As the video correction, color gamut conversion, color matching between cameras and materials, and the like are performed in some cases.

As the video adjustment, color adjustment, luminance adjustment, contrast adjustment, and the like are performed in some cases.

As the clip editing, cutting of clips, adjustment of order, adjustment of the time length, and the like are performed in some cases.

As the video effecting, combining of a CG video image, a special effect video image, and the like is performed in some cases.

Next, the configuration of the imaging system 500 used in the production ST2 is described.

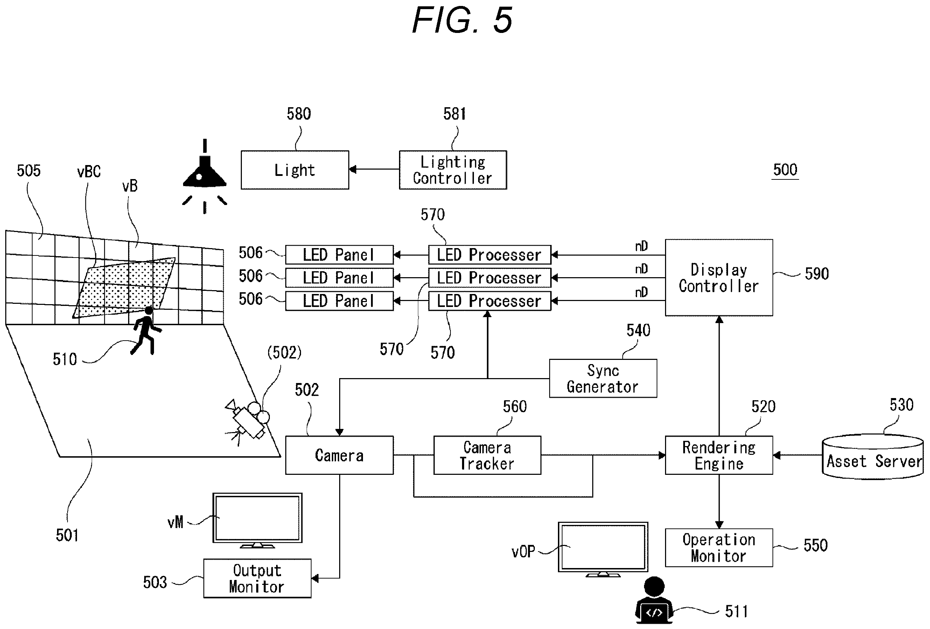

Fig. 5 is a block diagram illustrating the configuration of the imaging system 500 whose outline has been described with reference to Figs. 1, 2, and 3.

The imaging system 500 illustrated in Fig. 5 includes the LED wall 505 formed with the plurality of LED panels 506, the camera 502, the output monitor 503, and the lights 580 described above. As illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

The LED processors 570 are provided for the respective LED panels 506, and perform video display driving for the corresponding LED panels 506.

The sync generator 540 generates a synchronization signal for synchronizing the frame timings of the video images displayed by the LED panels 506 and the frame timing of the imaging by the camera 502, and supplies the synchronization signal to each of the LED processors 570 and the camera 502. However, this does not interfere with the supply of the output from the sync generator 540 to the rendering engine 520.

The camera tracker 560 generates information about the imaging by the camera 502 at each frame timing, and supplies the information to the rendering engine 520. For example, the camera tracker 560 detects the information about the position of the camera 502 relative to the position of the LED wall 505 or a predetermined reference position, and the imaging direction of the camera 502 as one of the pieces of the imaging information, and supplies the information to the rendering engine 520.

As a specific detection method implemented by the camera tracker 560, there is a method by which reflectors are arranged on the ceiling, and the position is detected from reflected light of infrared light emitted from the side of the camera 502 onto the reflectors. As a detection method, there also is a method by which the self-position of the camera 502 is estimated from information about a gyroscope mounted on the platform of the camera 502 or the main body of the camera 502, or through recognition of a video image captured by the camera 502.

Also, the angle of view, the focal length, the f-number, the shutter speed, the lens information, or the like is supplied as the imaging information from the camera 502 to the rendering engine 520 in some cases.

The asset server 530 is a server that can store the 3D model created in the asset creation ST1, which is the 3D background data, in a recording medium, and read the 3D model as necessary. That is, the asset server 530 functions as a database (DB) of the 3D background data.

The rendering engine 520 performs a process of generating the background video vB to be displayed on the LED wall 505. To do so, the rendering engine 520 reads the necessary 3D background data from the asset server 530. The rendering engine 520 then generates a video image of the outer frustum to be used in the background video vB as a video image obtained by rendering the 3D background data as viewed from spatial coordinates designated in advance.

Further, as processing for each one frame, the rendering engine 520 identifies the viewpoint position and the like with respect to the 3D background data, using the imaging information supplied from the camera tracker 560 or the camera 502, and renders the captured region video vBC (inner frustum).

Moreover, the rendering engine 520 combines the captured region video vBC rendered for each frame with the outer frustum generated in advance, to generate the background video vB as the video data of one frame. The rendering engine 520 then transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this point of time, the display controller 590 may perform calibration on individual differences, manufacturing errors, and the like in color development and the like between display units.

Note that the display controller 590 may not be provided, and the rendering engine 520 may perform these processes. That is, the rendering engine 520 may generate the divided video signals nD, perform calibration, and transmit the divided video signals nD to the respective LED panels 506.

By the respective LED processors 570 driving the LED panels 506 on the basis of the received divided video signals nD, the entire background video vB is displayed on the LED wall 505. The background video vB includes the captured region video vBC rendered depending on the position or the like of the camera 502 at that time point.

The camera 502 can image the performance by the performer 510, including the background video vB displayed on the LED wall 505 in this manner. The video image obtained by the imaging by the camera 502 is recorded on a recording medium in the camera 502 or an external recording device (not illustrated), and is supplied to the output monitor 503 in real time, to be displayed as the monitor video vM.

The operation monitor 550 displays an operation image vOP for controlling the rendering engine 520. While viewing the operation image vOP, an engineer 511 can perform necessary settings and operations regarding the rendering of the background video vB.

The lighting controller 581 controls the emission intensity, the emission color, the irradiation direction, and the like of the lights 580. For example, the lighting controller 581 may control the lights 580 asynchronously with the rendering engine 520, or may perform control in synchronization with the imaging information and the rendering process. Therefore, the lighting controller 581 may perform light emission control in accordance with an instruction from the rendering engine 520, a master controller (not illustrated), or the like.

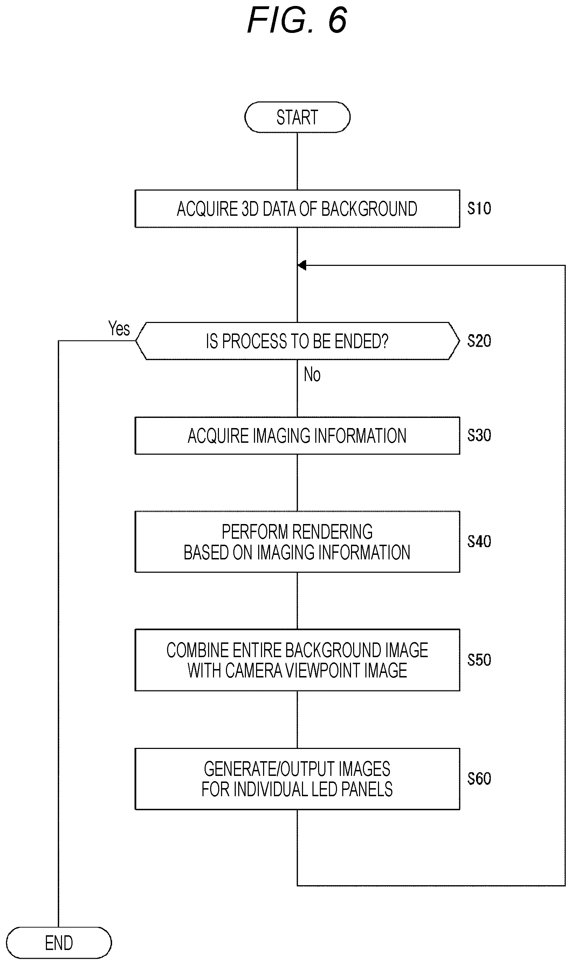

Fig. 6 shows an example of a process to be performed by the rendering engine 520 in the imaging system 500 having such a configuration.

In step S10, the rendering engine 520 reads the 3D background data to be used this time from the asset server 530, and decompresses the 3D background data in an internal work area.

After that, the rendering engine 520 repeats the process from step S30 to step S60 at each frame timing of the background video vB, until it is determined in step S20 that the display of the background video vB based on the read 3D background data is to be ended.

In step S30, the rendering engine 520 acquires the imaging information from the camera tracker 560 or the camera 502. Thus, the position and the state of the camera 502 to be reflected in the current frame are checked.

In step S40, the rendering engine 520 performs rendering on the basis of the imaging information. That is, the viewpoint position with respect to the 3D background data is identified on the basis of the position, the imaging direction, the angle of view, or the like of the camera 502 to be reflected in the current frame, and rendering is performed. At this point of time, video processing reflecting the focal length, the f-number, the shutter speed, the lens information, or the like can also be performed. By this rendering, video data as the captured region video vBC can be obtained.

In step S50, the rendering engine 520 performs a process of combining the outer frustum as the entire background video image with a video image reflecting the viewpoint position of the camera 502, which is the captured region video vBC. For example, the process is to combine a video image generated by reflecting the viewpoint of the camera 502 with a video image of the entire background rendered at a specific reference viewpoint. Thus, the background video vB of one frame displayed on the LED wall 505, which is the background video vB including the captured region video vBC, is generated.

The processing in step S60 is performed by the rendering engine 52 or the display controller 590. In step S60, the rendering engine 520 or the display controller 590 generates the divided video signals nD obtained by dividing the background video vB of one frame into video images to be displayed on the individual LED panels 506. Calibration is performed in some cases. The divided video signals nD are then transmitted to the respective LED processors 570.

Through the above process, the background video vB including the captured region video vBC imaged by the camera 502 is displayed on the LED wall 505 at each frame timing.

<<1.2. Details of the Technology>>

An imaging system and content production to which the technology according to the present disclosure can be applied have been described through an example.

By virtual production using the imaging system 500 according to the present embodiment, it is possible to visualize a CG background and VFX with high accuracy in real time during image capturing, and increase the efficiency of the post-production ST3, compared with green screen imaging or the like.

In the post-production ST3, however, processes such as replacement, partial correction, and addition of an effect are performed on the captured image (the monitor video vM in the example described with reference to Figs. 1 to 6) in some cases.

At this point of time, there are cases where separation is required between the region corresponding to an image displayed on the LED wall 505 in the captured image (the background video vB in the example described with reference to Figs. 1 to 6) and the region corresponding to physical objects including the performer 510.

Here, examples of techniques for extracting a predetermined region in an image include the learning-based technique disclosed in Non-Patent Document 1.

The technique disclosed in Non-Patent Document 1 is to input a background image obtained by imaging only a background in advance and a captured image obtained by imaging the background and a physical (foreground) object to a neural network, and infers a foreground mask image obtained by extracting only the physical objects.

However, in a case where the lighting environment such as the light 580, the LED wall 505, and the like greatly changes as in virtual production, for example, the inference accuracy might be significantly lowered due to the change in the lighting environment by the technique disclosed in Non-Patent Document 1.

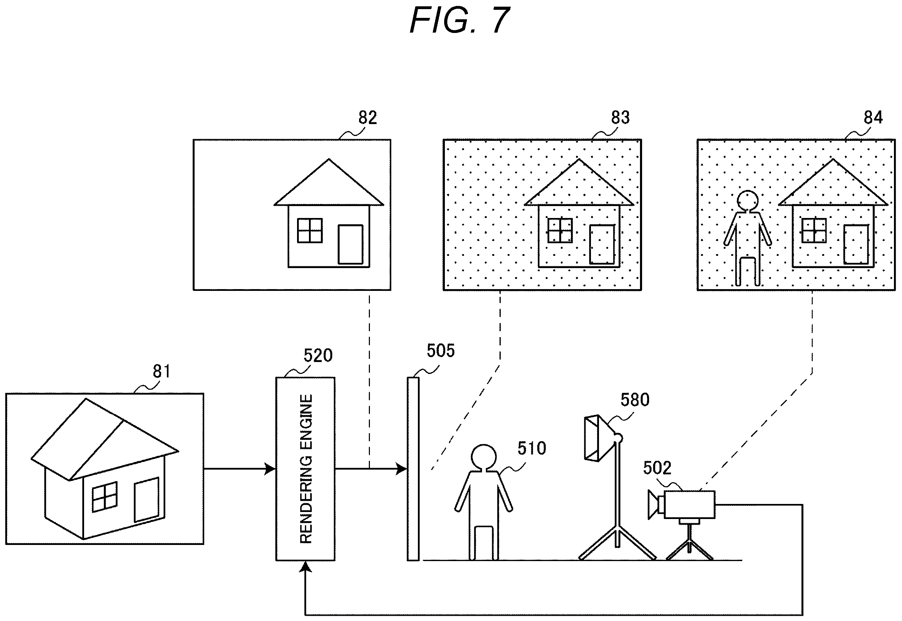

Fig. 7 is a diagram illustrating an example of an imaging environment according to the present embodiment. In the case of the example illustrated in Fig. 7, the rendering engine 520 renders 3D data 81 (the 3D background data in the example described with reference to Figs. 1 to 6) on the basis of the position and orientation of the camera 502, and generates a rendered image 82.

The rendered image 82 corresponds to the captured region video vBC in the example described with reference to Figs. 1 to 6.

Further, the LED wall 505 displays the input rendered image 82. A physical object such as the performer 510 is placed on the display surface side of the LED wall 505.

That is, the rendered image 82 according to the present embodiment is displayed as the background for the physical object.

More specifically, the rendered image 82 according to the present embodiment is displayed by a display device such as the LED wall 505 disposed behind the physical object, with the camera 502 being the base point.

The camera 502 images the physical object with the rendered image 82 as the background, and generates a captured image 84 (the monitor video vM in the example described with reference to Figs. 1 to 6).

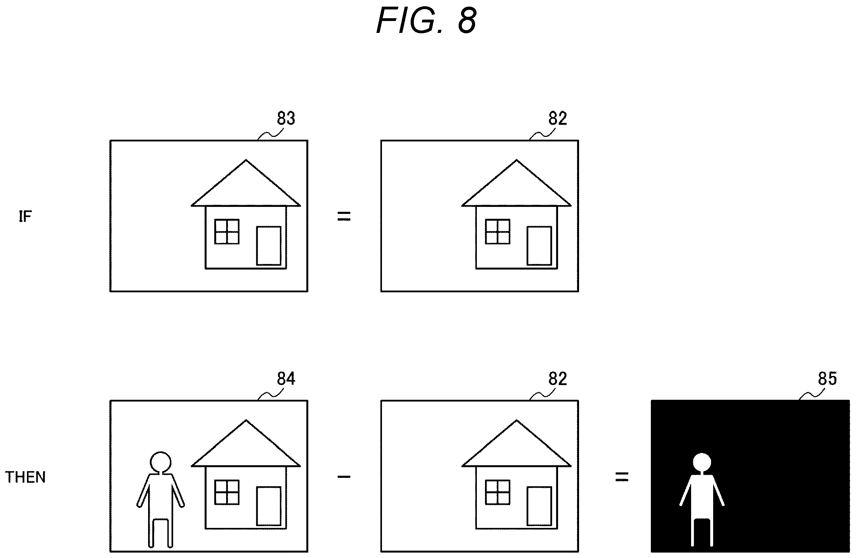

Here, as illustrated in the upper half of Fig. 8, it is assumed that a background image 83 (an image obtained by capturing the rendered image 82 displayed by the LED wall 505) included in the captured image 84 is the same as or extremely similar to the rendered image 82.

In this case, as illustrated in the lower half of Fig. 8, it is possible to obtain a mask image 85 obtained by extracting the region corresponding to the physical object such as the performer 510 by eliminating a known difference between the captured image 84 and the rendered image 82.

In practice, however, the background image 83 greatly changes in hue or the like compared with the rendered image 82 due to the lighting by the light 580 or the like, as illustrated in Fig. 7.

Therefore, as illustrated in the lower half of Fig. 8, it is difficult to obtain the mask image 85 with high accuracy only by simply eliminating the difference between the captured image 84 and the rendered image 82.

The technical idea according to the present disclosure has been conceived focusing on the above aspects, and makes it possible to absorb changes in the lighting environment and accurately infer the extraction target region.

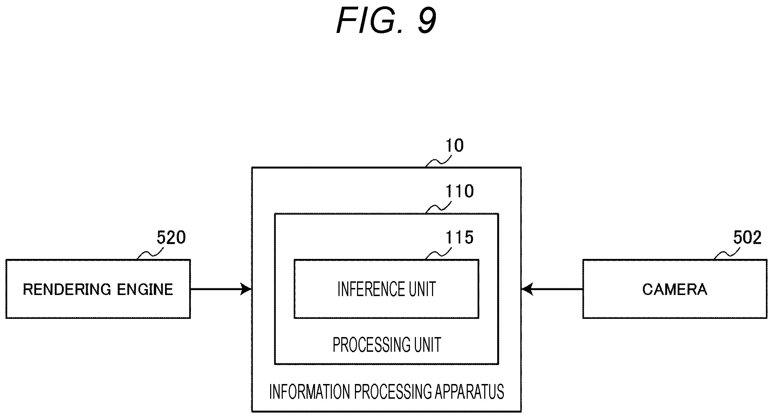

Fig. 9 is a block diagram for explaining an example of the functional configuration of an information processing apparatus 10 according to the present embodiment.

The information processing apparatus 10 according to the present embodiment includes a processing unit 110 that infers the region of a physical object in the captured image 84, on the basis of a non-extraction-target image displayed or projected in an imaging space and the captured image 84 obtained by imaging the non-extraction-target image and the physical object present in the imaging space.

Here, the appearance of the above non-extraction-target image depending on the position and orientation of the camera 502 that images the captured image 84, which is the appearance of the above non-extraction-target image as viewed from the camera 502, may be known.

An example of the above non-extraction-target image is the rendered image 82.

Further, the processing unit 110 according to the present embodiment includes an inference unit 115 that outputs the mask image 85 obtained by extracting the region of the physical object from the captured image 84 on the basis of the input non-extraction-target image and the captured image 84.

In the description below, generation of the inference unit 115 and inference of the mask image 85 using the inference unit 115 according to the present embodiment will be described in detail.

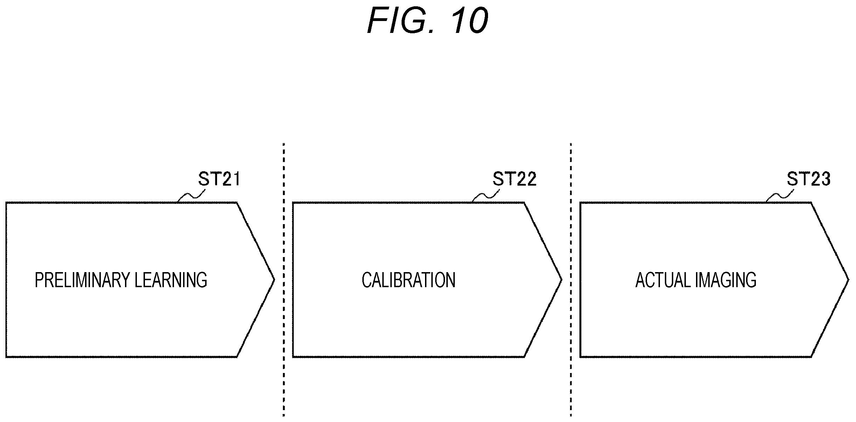

The generation of the inference unit 115 and the inference of the mask image 85 using the inference unit 115 according to the present embodiment are roughly divided into the three stages of preliminary learning ST21, calibration ST22, and actual imaging ST23 as illustrated in Fig. 10.

In the preliminary learning ST21, preliminary learning of the inference unit 115 is performed using a method equivalent to the method disclosed in Non-Patent Document 1, for example. However, when the difference between the background image 83 and the rendered image 82 increases due to the lighting environment as described above, it becomes difficult for the inference unit 115 at the stage where the preliminary learning is completed to infer the mask image 85 with high accuracy.

Therefore, in the calibration ST22 according to the present embodiment, learning for absorbing the difference between the background image 83 and the rendered image 82 (an example of the non-extraction-target image) due to the lighting environment is performed.

Specifically, the inference unit 115 performs learning to output the mask image 85 on the basis of the input non-extraction-target image and a second captured image 842 obtained by imaging the non-extraction-target image.

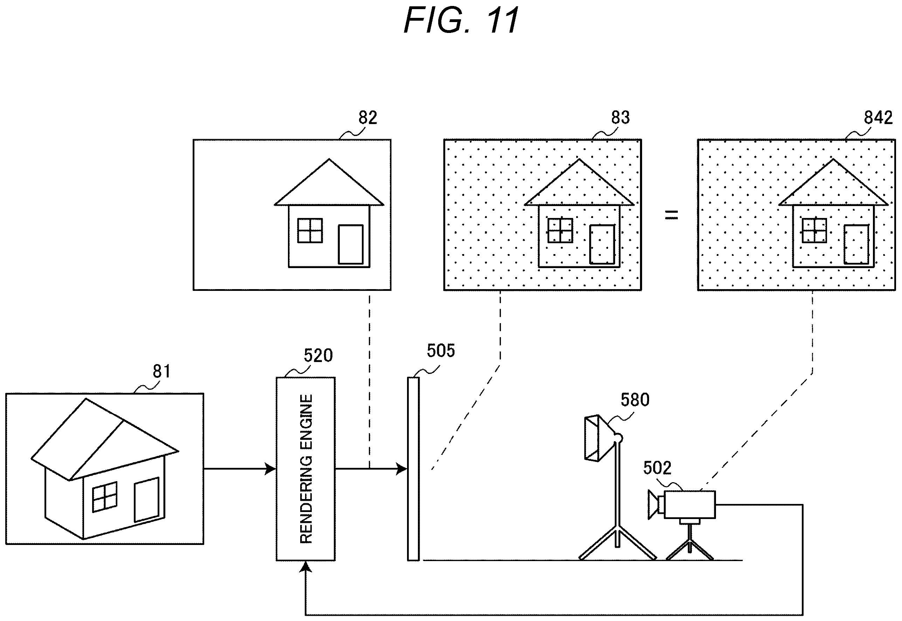

Fig. 11 is a diagram for explaining the second captured image 842 according to the present embodiment. Unlike the captured image 84 illustrated in Fig. 7, the second captured image 842 according to the present embodiment is captured in a situation where no physical objects such as the performer 510 are placed on the display surface side of the LED wall 505. Also, at this point of time, to further ensure robustness against changes in the lighting environment acquired by the learning described later, the second captured image 842 may be imaged while the lighting environment is changed.

The second captured image 842 imaged in the above situation is equivalent to the background image 83.

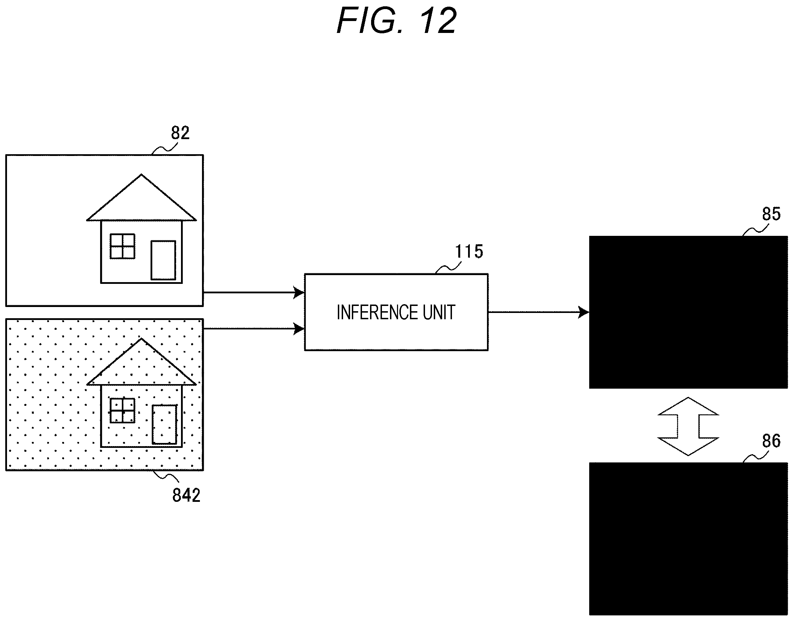

Fig. 12 is a diagram for explaining learning of the inference unit 115 in the calibration ST22 according to the present embodiment.

In the calibration ST22 according to the present embodiment, the rendered image 82 and the second captured image 842 imaged as illustrated in Fig. 11 are input to the inference unit 115.

The inference unit 115 outputs the mask image 85 on the basis of the input rendered image 82 and second captured image 842.

As described above, the second captured image 842 imaged in the situation illustrated in Fig. 11 is an image equivalent to the background image 83. Furthermore, the difference between the rendered image 82 and the second captured image 842 greatly depends on a difference in the lighting environment due to the light 580 or the like.

In view of the above, the inference unit 115 according to the present embodiment may perform learning to output a mask image in which the values of all the pixels are 0, on the basis of the input rendered image 82 and second captured image 842.

More specifically, the inference unit 115 according to the present embodiment may perform supervised learning using a zero-image 86 in which the values of all the pixels are 0 as training data.

Here, in a case where the mask image 85 is expressed as M(x, y), the loss function as shown below may be used in the above supervised learning, for example. Note that x and y represent the coordinates of the image.

$$L = \Sigma_{x, y} M(x, y)^2$$

That is, the inference unit 115 according to the present embodiment may perform fine tuning of the network by the error back-propagation method based on the square loss in all the pixels (x, y).

By such learning, it is possible to absorb the difference caused between the background image 83 and the rendered image 82 by the lighting environment.

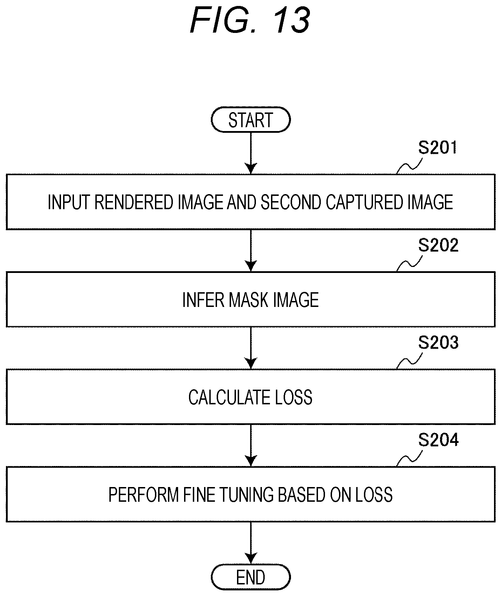

Fig. 13 is a flowchart showing a flow of learning of the inference unit 115 in the calibration ST22 described above.

As illustrated in Fig. 12, the learning of the inference unit 115 in the calibration ST22 includes the four stages of inputting of the rendered image 82 and the second captured image 842 (S201), inference of the mask image 85 (S202), loss calculation (S203), and fine tuning based on loss (S204).

Next, the inference of the mask image 85 by the inference unit 115 in the actual imaging ST23 according to the present embodiment is described. Note that, in the actual imaging ST23 according to the present embodiment, the captured image 84 including a physical object such as the performer 510 is imaged in the imaging environment illustrated in Fig. 7.

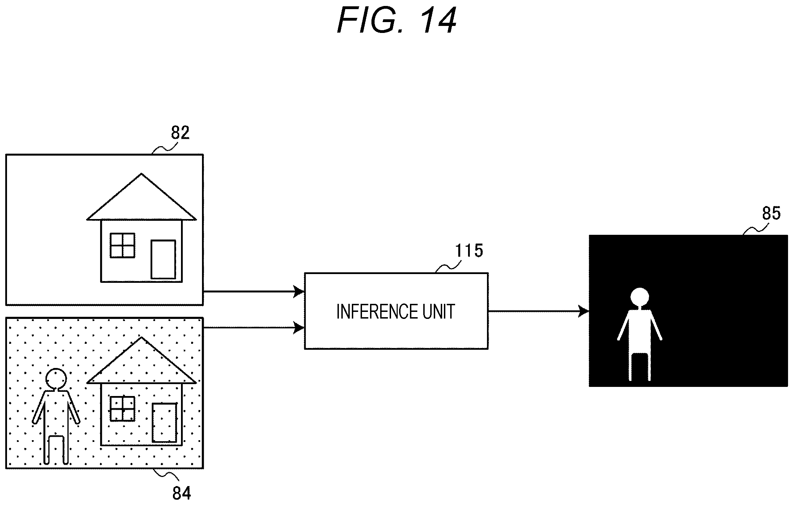

Fig. 14 is a diagram for explaining the inference of the mask image 85 by the inference unit 115 in the actual imaging ST23 according to the present embodiment.

In the actual imaging ST23, the rendered image 82 and the captured image 84 are input to the inference unit 115.

The inference unit 115 infers and outputs the mask image 85 on the basis of the input rendered image 82 and captured image 84.

With the inference unit 115 that has undergone the learning of the inference unit 115 in the calibration ST22 described above, it is possible to absorb differences in the lighting environment, and infer the mask image 85 with high accuracy. Furthermore, as the mask image 85 is inferred with high accuracy, the image processing in the post-production ST3 can be made more efficient, and the cost can be lowered.

Note that the inference of the mask image 85 by the inference unit 115 may be performed in real time at the same time as the imaging of the captured image 84.

<<1.3. Modifications>>

Next, modifications according to the present embodiment are described.

In the above description, a case where the inference unit 115 performs learning based on the input rendered image 82 and second captured image 842 in the calibration ST22 has been described.

However, the information that is input to the inference unit 115 at the time of learning in the calibration ST22 is not limited to the rendered image 82 and the second captured image 842.

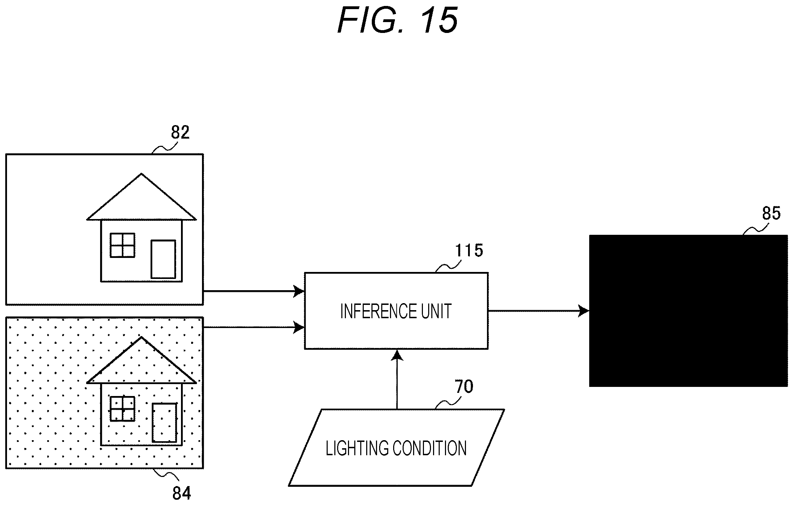

For example, in the above learning, a lighting condition 70 may be further input to the inference unit 115 as illustrated in Fig. 15.

That is, the inference unit 115 according to the present embodiment may perform learning to output the mask image 85 further on the basis of the input lighting condition 70.

Note that the lighting condition 70 may be information obtained by featurization of information such as the position and type of lighting by the light 580 or the like and the intensity of the light to be emitted.

Furthermore, the information as described above may be acquired from internal parameters of a light such as the light 580, or may be acquired by various sensors, for example.

By such learning based on the lighting condition 70, it is possible to perform conditioning in the lighting environment, and infer the mask image 85 with higher accuracy.

Also, as mentioned in the above description, the processing unit 110 includes the inference unit 115 that infers the mask image 85 on the basis of the rendered image 82 and the captured image 84.

In addition to the inference unit 115, the processing unit 110 according to the present embodiment may further include a second inference unit 117 that outputs a quasi-captured image 87 on the basis of an input image.

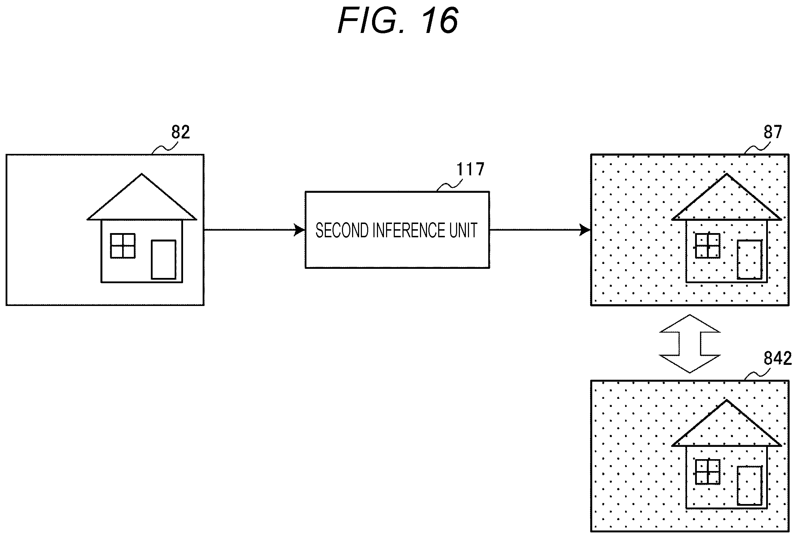

Fig. 16 is a diagram for explaining learning of the second inference unit 117 according to the present embodiment. The second inference unit 117 according to the present embodiment is generated by supervised learning for outputting the quasi-captured image 87 on the basis of the input rendered image 82 (an example of the non-extraction-target image), using the second captured image 842 as the training data.

The quasi-captured image 87 output by the second inference unit 117 generated by the supervised learning as described above is an image in which the features of the second captured image 842 are reflected in an input image.

Here, a situation in which an AR object is further superimposed on the captured image 84 is assumed. In this situation, in a case where the AR object is simply superimposed on the captured image 84, the lighting environment at the time of imaging of the captured image 84 is not reflected in the AR object. Therefore, a phenomenon in which the AR object does not conform to or look unnatural in the captured image 84, or the like might occur.

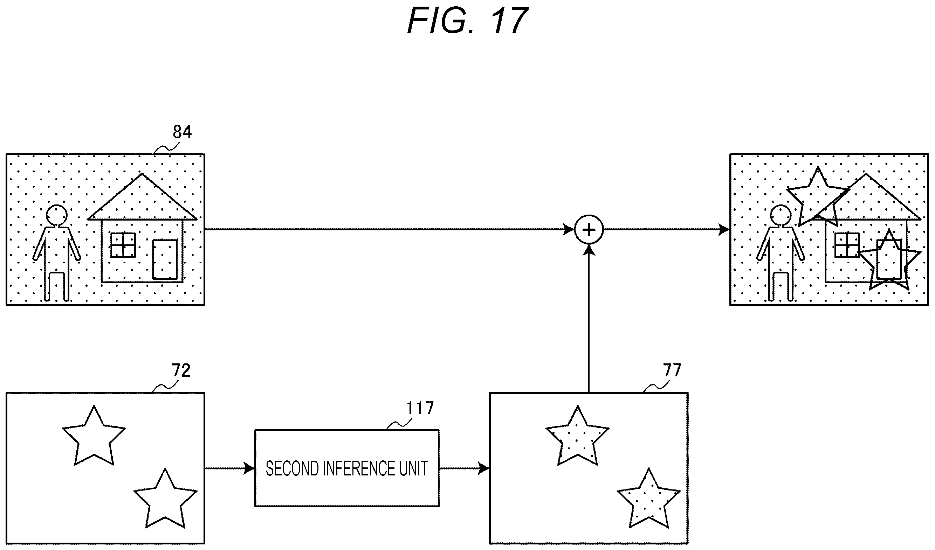

On the other hand, as illustrated in Fig. 17, an AR object quasi-captured image 77 obtained by inputting an AR object rendered image 72 to the second inference unit 117 according to the present embodiment reflects the features such as the color of the second captured image 842.

Furthermore, the processing unit 110 may combine (superimpose) the AR object quasi-captured image 77 output by the second inference unit 117 with the captured image 84.

By the processing as described above, it is possible to realize AR superimposition that matches better with the captured image 84.

Furthermore, examples of use of the second inference unit 117 according to the present embodiment are not limited to the above examples.

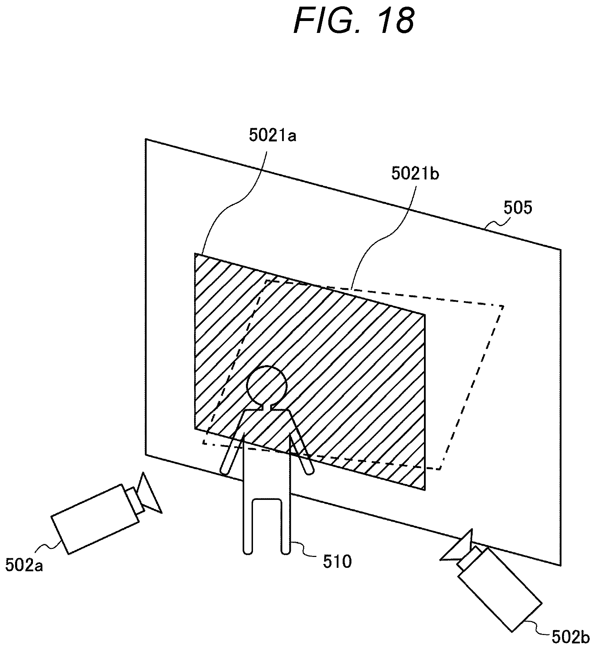

Fig. 18 is a diagram for explaining a situation in which one LED wall 505 is imaged with two cameras 502a and 502b.

Note that, in Fig. 18, the angle of view 5021a of the camera 502a is indicated by a solid line, the angle of view 5021a of the camera 502a is indicated by a solid line, and the angle of view 5021b of the camera 502b is indicated by a dot-and-dash line. In the display region of the LED wall 505 corresponding to the angle of view 5021a of the camera 502a, a rendered image 82a (indicated by hatching) depending on the position and orientation of the camera 502a is displayed.

In the case of general virtual production, it is difficult to switch the rendered image 82 to be displayed on the LED wall 505 depending on each camera of the plurality of cameras 502, and therefore, one camera 502 is used for imaging one LED wall 505.

With the second inference unit 117 according to the present embodiment, on the other hand, it is possible to image one LED wall 505 using the plurality of cameras 502, and obtain a composite image 89 including the background and a physical object, depending on the position and orientation of each camera 502.

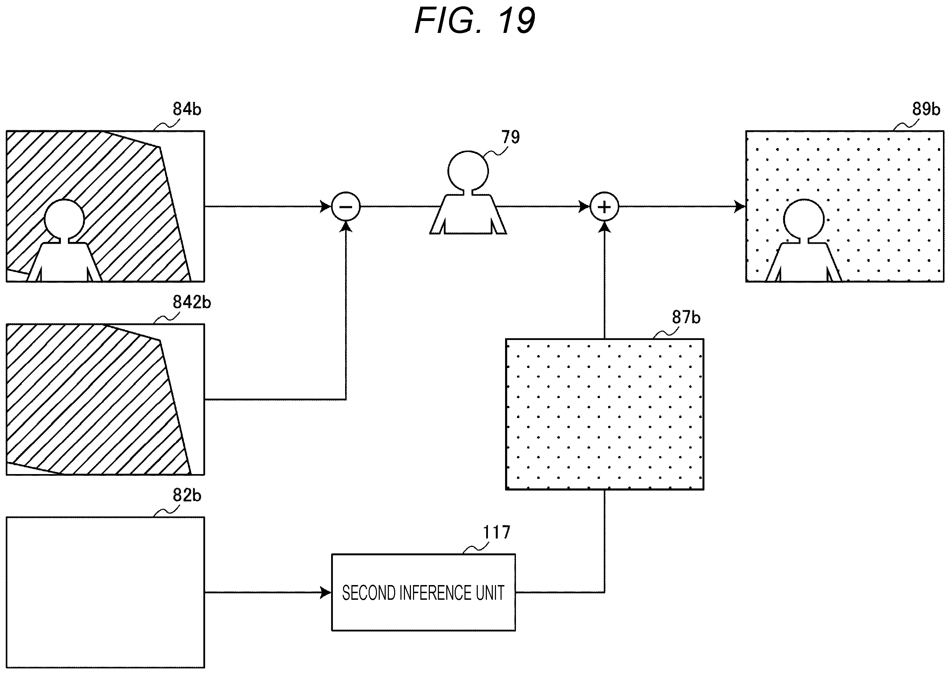

Fig. 19 is a diagram for explaining the generation of the composite image 89 according to the present embodiment.

Fig. 19 shows a captured image 84b captured by the camera 502b, and a second captured image 842b captured by the camera 502b. Note that the second captured image 842b is an image equivalent to a background image 83b for the camera 502b.

The captured image 84b includes a physical object (the performer 510). Further, the captured image 84b and the second captured image 842b each include the rendered image 82a (indicated by hatching) depending on the position and orientation of the camera 502a.

Here, by eliminating the difference between the captured image 84b and the second captured image 842b, it is possible to obtain a region 79 of the physical object by excluding the background region including the rendered image 82a.

Also, Fig. 19 shows a rendered image 82b depending on the position and orientation of the camera 502b. The second inference unit 117 outputs a quasi-captured image 87b on the basis of the input rendered image 82b.

The processing unit 110 according to the present embodiment can combine the region 79 of the physical object obtained as described above with the quasi-captured image 87b, to generate a composite image 89b including the background and the physical object, depending on the position and orientation of the camera 502b.

The generation of the composite image 89 according to the present embodiment has been described above.

Note that, in the above description, virtual production has been described as an example of content to which the technology according to the present disclosure can be applied, but the range of application of the technology according to the disclosure is not limited to such an example.

The technology according to the present disclosure is widely applicable to separation of a non-extraction-target image displayed or projected in an imaging space from the captured image 84.

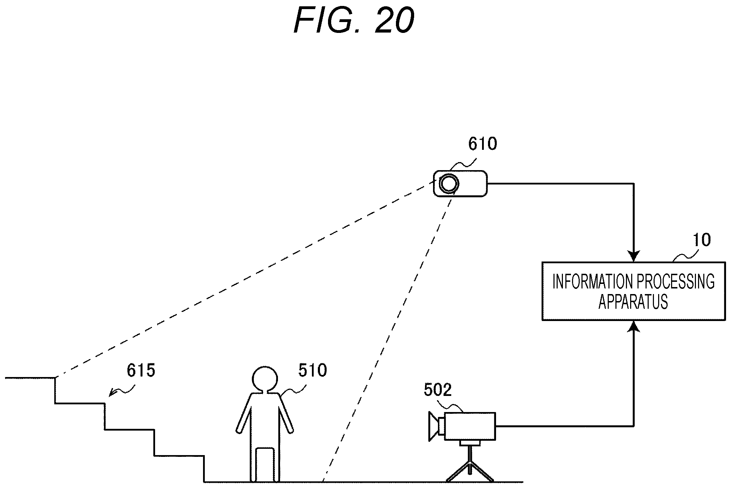

Fig. 20 is a diagram for explaining a case where the non-extraction-target image is a projection image. In the case of the example illustrated in Fig. 20, a projector 610 projects known projection data onto a projection target 615.

Here, in a case where the shape or the like of the projection target 615 is known, the projection data projected onto the projection target 615 is information equivalent to the 3D data 81.

Further, since the position and orientation of the camera 502, and the captured image 84 to be imaged by the camera 502 are known, the appearance of the projection data that is to be projected onto the projection target 615 and depends on the position and orientation of the camera 502 is also known.

Accordingly, the inference unit 115 can infer the mask image 85 on the basis of the projection data to be projected onto the projection target 615, and the captured image 84.

As described above, the non-extraction-target image is not limited to the rendered image 82 displayed on the LED wall 505, and may be any of various kinds of images that have a known appearance and depend on the position and orientation of the camera 502 that images the captured image 84.

The non-extraction-target image may be an image displayed by a transparent display, or an image projected in the air by a so-called aerial display, for example.

<2. Example of a Hardware Configuration>

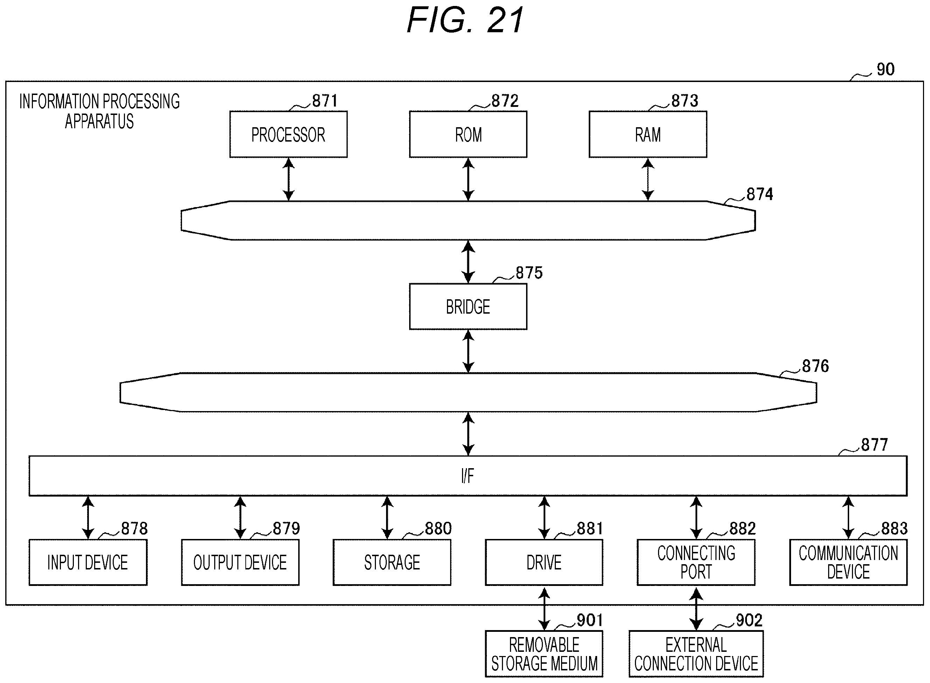

Next, an example of the hardware configuration of the information processing apparatus 10 according to an embodiment of the present disclosure is described. Fig. 21 is a block diagram illustrating an example of the hardware configuration of an information processing apparatus 90 according to an embodiment of the present disclosure. The information processing apparatus 90 may be a device having a hardware configuration equivalent to that of the information processing apparatus 10.

As illustrated in Fig. 21, the information processing apparatus 90 includes a processor 871, a ROM 872, a RAM 873, a host bus 874, a bridge 875, an external bus 876, an interface 877, an input device 878, an output device 879, a storage 880, a drive 881, a connecting port 882, and a communication device 883, for example. Note that the hardware configuration illustrated here is an example, and some of the components may be omitted. Also, components other than the components illustrated here may be further included.

(Processor 871)

The processor 871 functions as an arithmetic processing device or a control device, for example, and controls overall operations of the respective components or part of the operations on the basis of various programs stored in the ROM 872, the RAM 873, the storage 880, or a removable storage medium 901.

(ROM 872 and RAM 873)

The ROM 872 is a means for storing the programs to be read by the processor 871, the data to be used for processing, and the like. The RAM 873 temporarily or permanently stores the programs to be read into the processor 871, various parameters that change as appropriate when the programs are executed, and the like, for example.

(Host Bus 874, Bridge 875, External Bus 876, and Interface 877)

The processor 871, the ROM 872, and the RAM 873 are mutually connected via the host bus 874 capable of highspeed data transmission, for example. The host bus 874, on the other hand, is connected to the external bus 876 having a relatively low data transmission speed via the bridge 875, for example. Further, the external bus 876 is connected to various components via the interface 877.

(Input Device 878)

As the input device 878, a mouse, a keyboard, a touch panel, buttons, switches, a lever, and the like are used, for example. Furthermore, as the input device 878, a remote controller (hereinafter referred to as a remote) capable of transmitting a control signal using infrared rays or some other radio waves may be used. Also, the input device 878 includes a voice input device such as a microphone.

(Output Device 879)

The output device 879 is a device capable of visually or auditorily notifying the user of obtained information, such as a display device typified by a cathode ray tube (CRT), an LCD, an organic EL, or the like, an audio output device typified by a speaker, a headphone, or the like, a printer, a mobile phone, a facsimile machine, or the like, for example. Also, the output device 879 according to the present disclosure includes various vibration devices capable of outputting tactile stimuli.

(Storage 880)

The storage 880 is a device for storing various kinds of data. As the storage 880, a magnetic storage device such as a hard disk drive (HDD), a semiconductor storage device, an optical storage device, a magneto-optical storage device, or the like is used, for example.

(Drive 881)

The drive 881 is a device that reads information recorded in the removable storage medium 901 such as a magnetic disk, an optical disk, a magneto-optical disk, or a semiconductor memory, or writes information into the removable storage medium 901, for example.

(Removable Storage Medium 901)

The removable storage medium 901 is a DVD medium, a Blu-ray (registered trademark) medium, an HD DVD medium, one of various semiconductor storage media, or the like, for example. It is needless to say that the removable storage medium 901 may be an IC card on which a noncontact IC chip is mounted, an electronic device, or the like, for example.

(Connecting Port 882)

The connecting port 882 is a port for connecting an external connection device 902 such as a universal serial bus (USB) port, an IEEE 1394 port, a small computer system interface (SCSI), an RS-232C port, or an optical audio terminal, for example.

(External Connection Device 902)

The external connection device 902 is a printer, a portable music player, a digital camera, a digital video camera, an IC recorder, or the like, for example.

(Communication Device 883)

The communication device 883 is a communication device for connecting to a network, and is a wired or wireless local area network (LAN), Bluetooth (registered trademark), a communication card for wireless USB (WUSB), a router for optical communication, a router for asymmetric digital subscriber line (ADSL), a modem for various types of communication, or the like, for example.

<3. Summary>

As described above, the information processing apparatus 10 according to an embodiment of the present disclosure includes the processing unit 110 that infers the region of a physical object in the captured image 84, on the basis of a non-extraction-target image displayed or projected in an imaging space and the captured image 84 obtained by imaging the non-extraction-target image and the physical object present in the imaging space.

Further, the appearance of the above non-extraction-target image depending on the position and orientation of the camera 502 that images the captured image 84, which is the appearance of the above non-extraction-target image as viewed from the camera 502, may be known.

With the above configuration, it is possible to absorb changes in the lighting environment and infer the extraction target region with high accuracy.

Although the preferred embodiment of the present disclosure has been described above in detail with reference to the accompanying drawings, the technical scope of the present disclosure is not limited to such an example. It is obvious that those with ordinary skill in the technical field of the present disclosure can conceive various alterations or corrections within the scope of the technical idea recited in the claims, and it is naturally understood that these alterations or corrections also fall within the technical scope of the present disclosure.

Further, each step relating to a process described in the present disclosure is not necessarily carried out in chronological order according to the order shown in a flowchart or a sequence diagram. For example, the respective steps relating to a process performed by each apparatus may be carried out in an order different from the described one, or may be carried out in parallel with each other.

Furthermore, a series of processes to be performed by each device described in the present disclosure may be implemented by a program stored in a non-transitory computer readable storage medium. When the computer executes each program, for example, the program is loaded into a RAM and is executed by a processor such as a CPU. The above storage medium is a magnetic disk, an optical disc, a magneto-optical disk, a flash memory, or the like, for example. Also, the above program may be distributed via a network, for example, without the use of any storage medium.

Furthermore, the effects described in the present specification are merely exemplary or illustrative, but are not restrictive. In other words, the technology according to the present disclosure may produce other effects that are apparent to those skilled in the art from the description of the present specification, in combination with or instead of the effects described above.

Note that the following configurations also fall within the technological scope of the present disclosure.

(1) An information processing apparatus including

a processing unit that infers a region of a physical object in a captured image, on the basis of a non-extraction-target image displayed or projected in an imaging space and the captured image in which the non-extraction-target image and the physical object present in the imaging space are captured, in which
an appearance of the non-extraction-target image depending on a position and an orientation of a camera that images the captured image is known.

(2) The information processing apparatus according to (1), in which
the processing unit includes an inference unit that outputs a mask image obtained by extracting the region of the physical object from the captured image, on the basis of the non-extraction-target image and the captured image that have been input.

(3) The information processing apparatus according to (2), in which
the inference unit is generated by machine learning to output the mask image on the basis of the non-extraction-target image to be input and a second captured image obtained by imaging the non-extraction-target image.

(4) The information processing apparatus according to (3), in which
the inference unit is generated by supervised learning using a zero-image in which values of all pixels are 0 as training data.

(5) The information processing apparatus according to any one of (1) to (4), in which
the non-extraction-target image includes a rendered image obtained by rendering 3D data on the basis of the position and the orientation of the camera.

(6) The information processing apparatus according to (5), in which
the rendered image is displayed as a background for the physical object.

(7) The information processing apparatus according to (5) or (6), in which
the rendered image is displayed by a display device that is disposed behind the physical object, the camera being a base point.

(8) The information processing apparatus according to (3), in which
the inference unit is generated by machine learning to output the mask image further on the basis of a lighting condition that is input.

(9) The information processing apparatus according to (3), in which

the processing unit further includes a second inference unit that outputs a quasi-captured image on the basis of an input image, and
the second inference unit is generated by supervised learning using the non-extraction-target image as an input, and the second captured image as training data.

(10) The information processing apparatus according to (9), in which
the processing unit combines the captured image and the quasi-captured image.

(11) The information processing apparatus according to (9), in which
the processing unit combines the region of the physical object and the quasi-captured image.

(12) An information processing method including

by a processor,
inferring a region of a physical object in a captured image, on the basis of a non-extraction-target image displayed or projected in an imaging space and the captured image in which the non-extraction-target image and the physical object present in the imaging space are captured, in which
an appearance of the non-extraction-target image depending on a position and an orientation of a camera that images the captured image is known.

(13) A program for causing

a computer to function as
an information processing apparatus including
a processing unit that infers a region of a physical object in a captured image, on the basis of a non-extraction-target image displayed or projected in an imaging space and the captured image in which the non-extraction-target image and the physical object present in the imaging space are captured, in which
an appearance of the non-extraction-target image depending on a position and an orientation of a camera that images the captured image is known.

REFERENCE SIGNS LIST

| | |
|---|---|
| 10 | Information processing apparatus |
| 110 | Processing unit |
| 115 | Inference unit |
| 117 | Second inference unit |
| 502 | Camera |
| 505 | LED wall |
| 520 | Rendering engine |
| 580 | Light |
| 81 | 3D data |
| 82 | Rendered image |
| 83 | Background image |
| 84 | Captured image |
| 85 | Mask image |
| 86 | Zero-image |
| 87 | Quasi-captured image |
| 89 | Composite image |
| 842 | Second captured image |

**Claims**

1. An information processing apparatus comprising

a processing unit that infers a region of a physical object in a captured image, on a basis of a non-extraction-target image displayed or projected in an imaging space and the captured image in which the non-extraction-target image and the physical object present in the imaging space are captured, wherein
an appearance of the non-extraction-target image depending on a position and an orientation of a camera that images the captured image is known.

2. The information processing apparatus according to claim 1, wherein
the processing unit includes an inference unit that outputs a mask image obtained by extracting the region of the physical object from the captured image, on a basis of the non-extraction-target image and the captured image that have been input.

3. The information processing apparatus according to claim 2, wherein
the inference unit is generated by machine learning to output the mask image on a basis of the non-extraction-target image to be input and a second captured image obtained by imaging the non-extraction-target image.

4. The information processing apparatus according to claim 3, wherein
the inference unit is generated by supervised learning using a zero-image in which values of all pixels are 0 as training data.

5. The information processing apparatus according to claim 1, wherein
the non-extraction-target image includes a rendered image obtained by rendering 3D data on a basis of the position and the orientation of the camera.

**6.** The information processing apparatus according to claim 5, wherein
the rendered image is displayed as a background for the physical object.

**7.** The information processing apparatus according to claim 5, wherein
the rendered image is displayed by a display device that is disposed behind the physical object, the camera being a base point.

**8.** The information processing apparatus according to claim 3, wherein
the inference unit is generated by machine learning to output the mask image further on a basis of a lighting condition that is input.

**9.** The information processing apparatus according to claim 3, wherein

the processing unit further includes a second inference unit that outputs a quasi-captured image on a basis of an input image, and
the second inference unit is generated by supervised learning using the non-extraction-target image as an input, and the second captured image as training data.

**10.** The information processing apparatus according to claim 9, wherein
the processing unit combines the captured image and the quasi-captured image.

**11.** The information processing apparatus according to claim 9, wherein
the processing unit combines the region of the physical object and the quasi-captured image.

**12.** An information processing method comprising

by a processor,
inferring a region of a physical object in a captured image, on a basis of a non-extraction-target image displayed or projected in an imaging space and the captured image in which the non-extraction-target image and the physical object present in the imaging space are captured, wherein
an appearance of the non-extraction-target image depending on a position and an orientation of a camera that images the captured image is known.

**13.** A program for causing

a computer to function as
an information processing apparatus including a processing unit that infers a region of a physical object in a captured image, on a basis of a non-extraction-target image displayed or projected in an imaging space and the captured image in which the non-extraction-target image and the physical object present in the imaging space are captured, wherein
an appearance of the non-extraction-target image depending on a position and an orientation of a camera that images the captured image is known.

# FIG. 1

EP 4 579 583 A1

FIG. 2

EP 4 579 583 A1

## FIG. 3

## FIG. 4

ST1 Asset Creation

ST2 Production

ST3 Post-Production

# FIG. 5

# FIG. 6

START

ACQUIRE 3D DATA OF BACKGROUND — S10

IS PROCESS TO BE ENDED? — S20

Yes → END

No

ACQUIRE IMAGING INFORMATION — S30

PERFORM RENDERING
BASED ON IMAGING INFORMATION — S40

COMBINE ENTIRE BACKGROUND IMAGE
WITH CAMERA VIEWPOINT IMAGE — S50

GENERATE/OUTPUT IMAGES
FOR INDIVIDUAL LED PANELS — S60

FIG. 7

# FIG. 8

## FIG. 9

## FIG. 10

```
┌─────────────────────┐      ┌─────────────────────┐      ┌─────────────────────┐
│            ST21      │      │            ST22      │      │            ST23      │
│                    ╲ │      │                    ╲ │      │                    ╲ │
│ PRELIMINARY LEARNING │      │     CALIBRATION      │      │    ACTUAL IMAGING    │
│                    ╱ │      │                    ╱ │      │                    ╱ │
└─────────────────────┘      └─────────────────────┘      └─────────────────────┘
```

# FIG. 11

EP 4 579 583 A1

FIG. 12

# FIG. 13

```
        ( START )
            │
            ▼                              S201
┌─────────────────────────────────────────┐
│ INPUT RENDERED IMAGE AND SECOND CAPTURED IMAGE │
└─────────────────────────────────────────┘
            │                              S202
            ▼
┌─────────────────────────────────────────┐
│              INFER MASK IMAGE            │
└─────────────────────────────────────────┘
            │                              S203
            ▼
┌─────────────────────────────────────────┐
│              CALCULATE LOSS              │
└─────────────────────────────────────────┘
            │                              S204
            ▼
┌─────────────────────────────────────────┐
│       PERFORM FINE TUNING BASED ON LOSS  │
└─────────────────────────────────────────┘
            │
            ▼
         ( END )
```

FIG. 14

EP 4 579 583 A1

# FIG. 15

FIG. 16

EP 4 579 583 A1

*FIG. 17*

# FIG. 18

EP 4 579 583 A1

## FIG. 19

EP 4 579 583 A1

## FIG. 20

## FIG. 21

INFORMATION PROCESSING APPARATUS — 90

PROCESSOR — 871

ROM — 872

RAM — 873

— 874

BRIDGE — 875

— 876

I/F — 877

INPUT DEVICE — 878

OUTPUT DEVICE — 879

STORAGE — 880

DRIVE — 881

CONNECTING PORT — 882

COMMUNICATION DEVICE — 883

REMOVABLE STORAGE MEDIUM — 901

EXTERNAL CONNECTION DEVICE — 902

EP 4 579 583 A1

## INTERNATIONAL SEARCH REPORT

| International application No. |
| --- |
| **PCT/JP2023/025574** |

| A. | CLASSIFICATION OF SUBJECT MATTER |
| --- | --- |

*G06T 7/00*(2017.01)i; *G06T 7/194*(2017.01)i; *G06V 10/25*(2022.01)i
FI: G06T7/194; G06T7/00 350B; G06V10/25

According to International Patent Classification (IPC) or to both national classification and IPC

| B. | FIELDS SEARCHED |
| --- | --- |

Minimum documentation searched (classification system followed by classification symbols)

G06T7/00; G06T7/194; G06V10/25

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2022-102923 A (GORAKU INC) 07 July 2022 (2022-07-07) | 1-7, 12-13 |
| | see paragraphs [0027]-[0096], fig. 6 | |
| A | see paragraphs [0027]-[0096], fig. 6 | 8-11 |
| Y | 土田 勝 TSUCHIDA, Masaru. 人物検出を目的とした照明変化に応じた背景画像の生成 Background Subtraction under Changing Illumination. 電子情報通信学会技術研究報告 vol. 102 no. 554 IEICE Technical Report. 09 January 2003, pp. 43-48 | 1-7, 12-13 |
| | chapter 1 | |
| A | chapter 1 | 8 |
| Y | JP 2019-125269 A (KDDI CORP) 25 July 2019 (2019-07-25) | 1-7, 12-13 |
| | paragraphs [0002]-[0003], [0006]-[0014] | |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 September 2023** | **03 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/025574**

| Patent document cited in search report | | | Publication date (day/month/year) | Patent family member(s) | Publication date (day/month/year) |
|---|---|---|---|---|---|
| JP | 2022-102923 | A | 07 July 2022 | (Family: none) | |
| JP | 2019-125269 | A | 25 July 2019 | (Family: none) | |

Form PCT/ISA/210 (patent family annex) (January 2015)

**REFERENCES CITED IN THE DESCRIPTION**

**Non-patent literature cited in the description**

- **SHANCHUAN LIN**. *Real-Time High-Resolution Background Matting*, 18 August 2022, <https://arxiv.org/pdf/2012.07810.pdf>